# EUROPEAN PATENT APPLICATION

(11) **EP 4 664 284 A1**
(43) Date of publication of application: **17.12.2025**
(21) Application number: 24763060.1
(22) Date of filing: 23.02.2024
(51) Int. Cl.: G06F 9/48

(54) **TASK OPERATION METHOD AND APPARATUS, AND RELATED DEVICE**

(30) Priority: 27.02.2023 CN 202310226120
(71) Applicant: Huawei Technologies Co., Ltd., Shenzhen, Guangdong 518129 (CN)
(72) Inventor: ZHANG, Guowei, Shenzhen, Guangdong 518129 (CN); HUANG, Youzhong, Shenzhen, Guangdong 518129 (CN); HUANG, Xiao, Shenzhen, Guangdong 518129 (CN); LIN, Jiashu, Shenzhen, Guangdong 518129 (CN); LIAO, Heng, Shenzhen, Guangdong 518129 (CN)
(74) Representative: Isarpatent
(86) International application number: PCT/CN2024/078277
(87) International publication number: WO 2024/179378

(57) **Abstract**

Embodiments of this application provide a task running method and apparatus and a related device. The task running method is applied to a task scheduler. A plurality of tasks are run in the task scheduler, and the plurality of tasks include a first task and a second task. The method includes: determining, based on input information of the second task, a dependency relationship corresponding to the second task, where the input information of the second task includes a first task identifier, the first task identifier indicates the first task, and the dependency relationship indicates that the second task depends on the first task; determining a running sequence of the first task and the second task based on the dependency relationship corresponding to the second task; and running the second task in the running sequence after running of the first task ends. During implementation of embodiments of this application, both a task dependency expression and a data dependency expression can be supported based on an underlying implementation of a data dependency. This improves operability of a hardware acceleration solution, and reduces project development complexity and engineering workload.

## Description

This application claims priority to Chinese Patent Application No. 202310226120.2, filed with the China National Intellectual Property Administration on February 27, 2023, and entitled "TASK RUNNING METHOD AND APPARATUS AND RELATED DEVICE", which is incorporated herein by reference in its entirety.

### TECHNICAL FIELD

This application relates to the field of computer technologies, and in particular, to a task running method and apparatus and a related device.

### BACKGROUND

A programming model is a paradigm abstraction provided by a computer system for a user to perform programming. In the general-purpose computing field, there are two types of common programming models: thread-level programming model and task-level programming model. The task-level programming model is a task-centered abstraction. To be specific, a program is written into a combination of tasks, and a compiler processes mapping from a task to a thread or an execution unit during running.

Currently, there are two types of architectures in the task-level programming model: data-dependency-based architecture and task-dependency-based architecture. A difference between the two types of architectures lies in how a dependency relationship between different tasks is expressed. In the data dependency architecture, data used by each task is specified for the task, and in the task dependency architecture, another task on which each task depends is specified for the task. Therefore, underlying expressions of the data dependency architecture and the task dependency architecture are different. In many systems, especially in a terminal system, heterogeneous computing is increasing. Developers of many services prefer a task dependency expression, while developers of some other services prefer a data dependency expression. Therefore, it is critical to provide a method for supporting both the data dependency expression and the task dependency expression.

However, in a conventional method, supporting both a task dependency expression and a data dependency expression requires two different programming models and two runtime underlying implementations. This brings a heavy burden to a system, increases project development complexity and engineering workload, and hinders operability of a hardware acceleration solution.

Therefore, it is urgent to provide a method for supporting both a task dependency expression and a data dependency expression by a programming model by using a same programming model and a same runtime underlying implementation.

### SUMMARY

Embodiments of this application provide a task running method and apparatus and a related device, to support both a task dependency and a data dependency in a data expression mode.

According to a first aspect, an embodiment of this application provides a task running method, applied to a task scheduler. A plurality of tasks are run in the task scheduler, and the plurality of tasks include a first task and a second task. The method includes: determining, based on input information of the second task, a dependency relationship corresponding to the second task, where the input information of the second task includes a first task identifier, the first task identifier indicates the first task, and the dependency relationship indicates that the second task depends on the first task; determining a running sequence of the first task and the second task based on the dependency relationship corresponding to the second task; and running the second task in the running sequence after running of the first task ends.

In a conventional technology, supporting both a task dependency expression and a data dependency expression between different tasks usually requires two underlying implementations, which hinders development of hardware acceleration. In this embodiment of this application, a task dependency expression between different tasks may be implemented in a data dependency manner. To be specific, a data expression between the different tasks that use the task dependency is implemented by using a special data object (a task identifier, which may also be referred to as a task handle) to indicate a task. Further, both the task dependency and the data dependency are supported based on an underlying implementation of the data expression. For example, when the plurality of tasks are run, and obtained input information of the task (for example, the input information of the second task) includes a task identifier, it may be determined, based on the task identifier in the input information, that the task is a task-dependent task, and a dependency relationship between the task and a task corresponding to the task identifier may be determined. It may be understood that the input information corresponding to the task includes a task identifier of a depended task (to be specific, the input information of the second task includes the task identifier corresponding to the first task). In other words, when the input information of the task includes the task identifier, it indicates that the task depends on the task corresponding to the task identifier, that is, a task dependency expression is implemented in the data dependency manner. After determining a dependency relationship between the tasks, the task scheduler may determine a running sequence of the tasks based on the dependency relationship, and then run the plurality of tasks in the running sequence. For example, when the dependency relationship indicates that the second task depends on the first task, the second task needs to be run after the first task. Therefore, in this embodiment of this application, both a task dependency and a data dependency are supported in a data expression mode. Compared with implementation of two different running modes in the conventional technology, this implementation reduces an obstacle of a hardware acceleration solution, improves operability, and reduces hardware acceleration costs.

In a possible implementation, the method further includes: obtaining task information of the first task, and generating the first task identifier, so that the first task identifier indicates the first task, where the task information includes identification information corresponding to the first task identifier; and reclaiming the first task identifier after running of both the second task and the first task ends.

In this embodiment of this application, after the task information of the first task is received, when it is determined that the first task identifier needs to be returned after running of the first task ends (that is, the task information includes the identification information corresponding to the first task identifier), the task scheduler needs to generate the task identifier. In addition, to ensure that a function of the task identifier is normal during running, the task scheduler further needs to manage a lifecycle for the task identifier, and the lifecycle for the task identifier needs to cover a lifecycle for the task indicated by the task identifier and a lifecycle for the task that depends on the indicated task, that is, a time period from a time point at which the first task identifier starts to indicate the first task after being generated to a time point at which running of the first task ends and running of the second task that depends on the first task end. The first task identifier uniquely indicates the first task, and may be generated to indicate another task based on a requirement only after the first task identifier is reclaimed. In this regard, a data expression in a case of the task dependency is implemented by indicating the task by the task identifier. Further, running in both a task dependency manner and a data dependency manner is supported based on an underlying implementation of the data expression. This reduces the obstacle of the hardware acceleration solution, improves operability, and reduces the hardware acceleration costs.

In a possible implementation, the plurality of tasks further include a third task, output information of the third task includes a first storage address, and the input information of the second task further includes the first storage address. The dependency relationship corresponding to the second task indicates that the second task depends on the first task and the third task. Determining the running sequence of the first task and the second task based on the dependency relationship corresponding to the second task includes: determining a running sequence of the first task, the second task, and the third task based on the dependency relationship corresponding to the second task. Running the second task in the running sequence after running of the first task ends includes: running the second task in the running sequence after running of both the first task and the third task ends.

In this embodiment of this application, the output information of the third task includes the first storage address, and the input information of the second task may further include the first storage address. A storage address is used to correspond to a task output, to be specific, a storage area corresponding to the storage address is used to store related data obtained after running of the task ends, where the related data may be considered as the task output obtained after ending of running. For example, the output information of the third task includes the first storage address, and a storage area corresponding to the first storage address is used to store data output after running of the third task ends. Therefore, in this embodiment of this application, the second task may depend on the first task based on the task identifier, and the second task may further depend on the third task based on storage address data. Compared with a case in which only a data expression mode exists in the conventional technology, this embodiment of this application is more generally applicable to various application scenarios, a conventional data dependency expression form is added, and development complexity and engineering workload are greatly reduced. In addition, in this embodiment of this application, a user can be more flexibly supported in implementing a data dependency expression and a task dependency expression. This greatly improves a data dependency compatibility expression capability in the conventional technology.

In a possible implementation, the plurality of tasks further include a fourth task and a fifth task, both output information of the fourth task and output information of the fifth task include a second storage address, and the input information of the second task further includes the second storage address. The method further includes: comparing task obtaining time corresponding to the fourth task with task obtaining time corresponding to the fifth task, to obtain a comparison result. Determining, based on the input information of the second task, the dependency relationship corresponding to the second task includes: determining, based on the comparison result and the input information of the second task, the dependency relationship corresponding to the second task.

In this embodiment of this application, a task output after running of a task ends may correspond to one storage address, but one storage address may correspond to task outputs of different tasks in different time periods. When output information of two tasks includes a same storage address, task outputs corresponding to the storage address are adjusted based on task obtaining time corresponding to the tasks. Correspondingly, the two tasks have a dependency relationship based on the storage address corresponding to the task outputs. For example, when the input information of the second task includes the second storage address, and both the output information of the fourth task and the output information of the fifth task include the second storage address, the task scheduler may determine that a task having a data dependency with the second task is the fourth task or the fifth task in a sequence of obtaining the fourth task and the fifth task. In addition, a running sequence of the fourth task and the fifth task may be determined based on the sequence.

In a possible implementation, determining, based on the comparison result and the input information of the second task, the dependency relationship corresponding to the second task includes: if the task obtaining time corresponding to the fifth task is later than the task obtaining time corresponding to the fourth task, determining that the dependency relationship corresponding to the second task indicates that the second task depends on the first task and the fifth task, where the dependency relationship corresponding to the second task includes a running sequence of the second task, the first task, and the fifth task. The method further includes: running the fifth task after running of the fourth task ends, and updating the second storage address from an output corresponding to the fourth task to an output corresponding to the fifth task after running of the fifth task ends.

In this embodiment of this application, when the task obtaining time corresponding to the fifth task is later than the task obtaining time corresponding to the fourth task, it indicates that the fifth task is closer to the second task than the fourth task, and a latest task output corresponding to the second storage address is the output of the fifth task. Therefore, it may be determined that the dependency relationship corresponding to the second task indicates that the second task depends on the fifth task. In addition, based on the comparison result of the task obtaining time, the running sequence of the fourth task and the fifth task may be further determined, in other words, the fifth task is run after running of the fourth task ends, and the second storage address is updated from the output corresponding to the fourth task to the output corresponding to the fifth task after running of the fifth task ends. Based on this, a dependency relationship between the plurality of tasks may be determined by the runtime task scheduler, and a conventional data dependency expression form is added.

In a possible implementation, the plurality of tasks further include a sixth task, and output information of the sixth task includes a third storage address. The method further includes: obtaining input information of the first task, where the input information of the first task includes the third storage address. Determining, based on the input information of the second task, the dependency relationship corresponding to the second task includes: determining, based on the input information of the second task and the input information of the first task, the dependency relationship corresponding to the second task, where the dependency relationship includes the running sequence of the second task, the first task, and the third task.

In this embodiment of this application, the dependency relationship between the plurality of tasks needs to be determined, and input information of the plurality of tasks is separately obtained. Based on task identifiers and/or storage addresses carried in the input information, the dependency relationship between the tasks may be determined, to determine a running sequence corresponding to the tasks. In this embodiment of this application, in this manner of determining the dependency relationship between the tasks based on the input information, where the input information may carry the task identifier, both the task dependency and the data dependency can be supported in the data expression mode, and underlying running logic is normalized. Compared with implementation of the two different running modes in the conventional technology, this implementation reduces the obstacle of the hardware acceleration solution, improves operability, and reduces the hardware acceleration costs.

According to a second aspect, an embodiment of this application provides a task running apparatus, used in a task scheduler. A plurality of tasks are run in the task scheduler, and the plurality of tasks include a first task and a second task. The apparatus includes:
a dependency unit, configured to determine, based on input information of the second task, a dependency relationship corresponding to the second task, where the input information of the second task includes a first task identifier, the first task identifier indicates the first task, and the dependency relationship indicates that the second task depends on the first task;
a first determining unit, configured to determine a running sequence of the first task and the second task based on the dependency relationship corresponding to the second task; and
a running unit, configured to run the second task in the running sequence after running of the first task ends.

In a possible implementation, the apparatus further includes: an obtaining unit, configured to: obtain task information of the first task, and generate the first task identifier, so that the first task identifier indicates the first task, where the task information includes identification information corresponding to the first task identifier; and a reclaiming unit, configured to reclaim the first task identifier after running of both the second task and the first task ends.

In a possible implementation, the plurality of tasks further include a third task, output information of the third task includes a first storage address, and the input information of the second task further includes the first storage address. The dependency relationship corresponding to the second task indicates that the second task depends on the first task and the third task. The first determining unit is specifically configured to: determine a running sequence of the first task, the second task, and the third task based on the dependency relationship corresponding to the second task. The running unit is specifically configured to: run the second task in the running sequence after running of both the first task and the third task ends.

In a possible implementation, the plurality of tasks further include a fourth task and a fifth task, both output information of the fourth task and output information of the fifth task include a second storage address, and the input information of the second task further includes the second storage address. The apparatus further includes: a comparison unit, configured to compare task obtaining time corresponding to the fourth task with task obtaining time corresponding to the fifth task, to obtain a comparison result. The dependency unit is specifically configured to: determine, based on the comparison result and the input information of the second task, the dependency relationship corresponding to the second task.

In a possible implementation, the dependency unit is specifically configured to: if the task obtaining time corresponding to the fifth task is later than the task obtaining time corresponding to the fourth task, determine that the dependency relationship corresponding to the second task indicates that the second task depends on the first task and the fifth task, where the dependency relationship corresponding to the second task includes a running sequence of the second task, the first task, and the fifth task. The apparatus further includes an updating unit, configured to: run the fifth task after running of the fourth task ends, and update the second storage address from an output corresponding to the fourth task to an output corresponding to the fifth task after running of the fifth task ends.

In a possible implementation, the plurality of tasks further include a sixth task, and output information of the sixth task includes a third storage address. The apparatus further includes: a second determining unit, configured to determine input information of the first task, where the input information of the first task includes the third storage address. The first determining unit is specifically configured to: determine, based on the input information of the second task and the input information of the first task, the dependency relationship corresponding to the second task, where the dependency relationship includes the running sequence of the second task, the first task, and the third task.

According to a third aspect, an embodiment of this application provides an electronic device. The electronic device includes a memory and a task scheduler, a plurality of tasks are run in the task scheduler, and the plurality of tasks include a first task and a second task. The task scheduler is configured to:
determine, based on input information of the second task, a dependency relationship corresponding to the second task, where the input information of the second task includes a first task identifier, the first task identifier indicates the first task, and the dependency relationship indicates that the second task depends on the first task;
determine a running sequence of the first task and the second task based on the dependency relationship corresponding to the second task; and
run the second task in the running sequence after running of the first task ends.

In a possible implementation, the task scheduler is further configured to: obtain task information of the first task, and generate the first task identifier, so that the first task identifier indicates the first task, where the task information includes identification information corresponding to the first task identifier; and reclaim the first task identifier after running of both the second task and the first task ends.

In a possible implementation, the plurality of tasks further include a third task, output information of the third task includes a first storage address, the input information of the second task further includes the first storage address, and the dependency relationship corresponding to the second task indicates that the second task depends on the first task and the third task. The task scheduler is specifically configured to determine a running sequence of the first task, the second task, and the third task based on the dependency relationship corresponding to the second task. The task scheduler is specifically configured to run the second task in the running sequence after running of both the first task and the third task ends.

In a possible implementation, the plurality of tasks further include a fourth task and a fifth task, both output information of the fourth task and output information of the fifth task include a second storage address, and the input information of the second task further includes the second storage address. The task scheduler is further configured to compare task obtaining time corresponding to the fourth task with task obtaining time corresponding to the fifth task, to obtain a comparison result. The task scheduler is specifically configured to determine, based on the comparison result and the input information of the second task, the dependency relationship corresponding to the second task.

In a possible implementation, the task scheduler is specifically configured to: if the task obtaining time corresponding to the fifth task is later than the task obtaining time corresponding to the fourth task, determine that the dependency relationship corresponding to the second task indicates that the second task depends on the first task and the fifth task. The dependency relationship corresponding to the second task includes a running sequence of the second task, the first task, and the fifth task. The task scheduler is further configured to: run the fifth task after running of the fourth task ends; and update the second storage address from an output corresponding to the fourth task to an output corresponding to the fifth task after running of the fifth task ends.

In a possible implementation, the plurality of tasks further include a sixth task, and output information of the sixth task includes a third storage address. The task scheduler is further configured to obtain input information of the first task, where the input information of the first task includes the third storage address. The task scheduler is specifically configured to determine, based on the input information of the second task and the input information of the first task, the dependency relationship corresponding to the second task, where the dependency relationship includes the running sequence of the second task, the first task, and the third task.

According to a fourth aspect, an embodiment of this application provides a computer program. The computer program includes instructions. When the computer program is executed by a computer, the computer is enabled to perform the procedure performed by the task running apparatus in the second aspect.

According to a fifth aspect, an embodiment of this application provides a computer-readable storage medium, configured to store computer software instructions used by the task running apparatus provided in the second aspect. The computer software instruction includes a program designed for performing the foregoing aspect.

According to a sixth aspect, an embodiment of this application provides an electronic device. The electronic device includes a task scheduler and a memory. The task scheduler is configured to support the electronic device in implementing a corresponding function in the task running method provided in the first aspect. The electronic device may further include the memory. The memory is configured to be coupled to a processor, and the memory stores program instructions and data that are necessary for the electronic device. The electronic device may further include a communication interface, used for communication between the electronic device and another device or a communication network on a wired serial bus.

### BRIEF DESCRIPTION OF DRAWINGS

To describe technical solutions in embodiments of this application more clearly, the following describes accompanying drawings used for describing embodiments of this application or the background.
FIG. 1A and FIG. 1B are a diagram of an architecture of a task running system according to an embodiment of this application;
FIG. 2 is a diagram of a lifecycle for a task identifier according to an embodiment of this application;
FIG. 3 is a schematic flowchart of a task running method according to an embodiment of this application;
FIG. 4 is a diagram of a structure of a task running apparatus according to an embodiment of this application; and
FIG. 5 is a diagram of a structure of another task running apparatus according to an embodiment of this application.

### DESCRIPTION OF EMBODIMENTS

The following describes embodiments of this application with reference to accompanying drawings in embodiments of this application.

In the specification, claims, and the accompanying drawings of this application, the terms "first", "second", "third", "fourth", "fifth", "sixth", and so on are intended to distinguish between different objects but do not indicate a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" refers to one or more, and "a plurality of" refers to two or more. "And/or" is used to describe an association relationship between associated objects, and indicates that three relationships may exist. For example, "A and/or B" may indicate: only A exists, only B exists, and both A and B exist. A and B may be singular or plural. The character "/" generally indicates an "or" relationship between the associated objects. "At least one of the following items (pieces)" or a similar expression thereof means any combination of these items, including a single item (piece) or any combination of plural items (pieces). For example, at least one of a, b, or c may indicate: a, b, c, "a and b", "a and c", "b and c", or "a and b and c", where a, b, and c may be singular or plural.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

The terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, in a distributed system, and/or across a network such as the internet interacting with other systems by using the signal).

First, for ease of understanding embodiments of this application, the following specifically analyzes a technical problem that needs to be resolved in embodiments of this application and an application scenario.

Currently, a programming model is a paradigm abstraction provided by a computer system for a user to perform programming. In the general-purpose computing field, there are two types of common programming models: thread-level programming model and task-level programming model.

The task-level programming model is a task-centered abstraction. The user may write a program into a combination of tasks, and a compiler or a task scheduler processes mapping from a task to a thread or an execution unit. This task-level programming model has many advantages. The mapping from a task to a thread or an execution unit may be performed in a user mode, and may be more lightweight. Therefore, a granularity of the task may be smaller than that of a conventional thread. This smaller granularity means that more parallelism degrees can be exploited in a system. This improves system performance and energy efficiency.

There are two types of architectures in the task-level programming model: data-dependency-based architecture and task-dependency-based architecture. A key difference between the two types of architectures lies in how a dependency relationship between tasks is expressed. In the data dependency method, data used by each task is specified for the task, and in the task dependency method, another task on which each task depends is directly specified for each task.

Specifically, the data dependency method may enable the user to care about only data used by a task when writing the task, and does not need to care about another task. Therefore, the data dependency method mainly exists in fields such as artificial intelligence and supercomputing. The task dependency method is applicable to the general-purpose computing field, especially in a control flow-intensive program designed according to a service process. In the task dependency method, a program or a transaction may be split into several steps, and only a relationship between each step (task) and previous and subsequent steps (tasks) is focused on. The task dependency method is easy to express.

As two types of different task-level programming model design paradigms, a data dependency and a task dependency are often accompanied by different internal implementations. Developers of many services prefer a task dependency expression, while developers of some other services prefer a data dependency expression. Therefore, it is critical to provide a method for supporting both the data dependency expression and the task dependency expression.

However, in a conventional method, supporting both a task dependency expression and a data dependency expression requires two different programming models and two runtime underlying implementations. This brings a heavy burden to a system and a task scheduler, increases project development complexity and engineering workload, and hinders operability of a hardware acceleration solution. Hardware acceleration is a current key means to improve system performance and energy efficiency after the Moore's Law encounters an obstacle.

Therefore, it is critical to provide an implementation method in which both the task dependency expression and the data dependency expression can be supported at the programming model, but a normalized internal implementation is used to support a combination of hardware and software.

In this regard, embodiments of this application provide a task running method and apparatus and related electronic device that can directly support a task dependency expression based on an underlying implementation of a data dependency. The task running method may be applied to a task scheduler. A plurality of tasks are run in the task scheduler, and the plurality of tasks include a first task and a second task. The method includes: determining, based on input information of the second task, a dependency relationship corresponding to the second task, where the input information of the second task includes a first task identifier, the first task identifier indicates the first task, and the dependency relationship indicates that the second task depends on the first task; determining a running sequence of the first task and the second task based on the dependency relationship corresponding to the second task; and running the second task in the running sequence after running of the first task ends. For example, input information IN and output information OUT of a task are specified, a corresponding data object or task object is accessed in a manner of the input information IN and the output information OUT, and then correct scheduling is performed through the task scheduler, to resolve the problems in the conventional technology solution of bringing the heavy burden to the system and the task scheduler, increasing project development complexity and engineering workload, and hindering operability of the hardware acceleration solution because supporting both the task dependency expression and the data dependency expression requires the two different programming models and the two runtime underlying implementations. For a specific implementation of this application, refer to the related descriptions in the following embodiments. Details are not described herein again in embodiments of this application.

In view of the technical problem proposed above, for ease of understanding of embodiments of this application, the following first describes an architecture of a task running system in task running systems on which embodiments of this application are based.

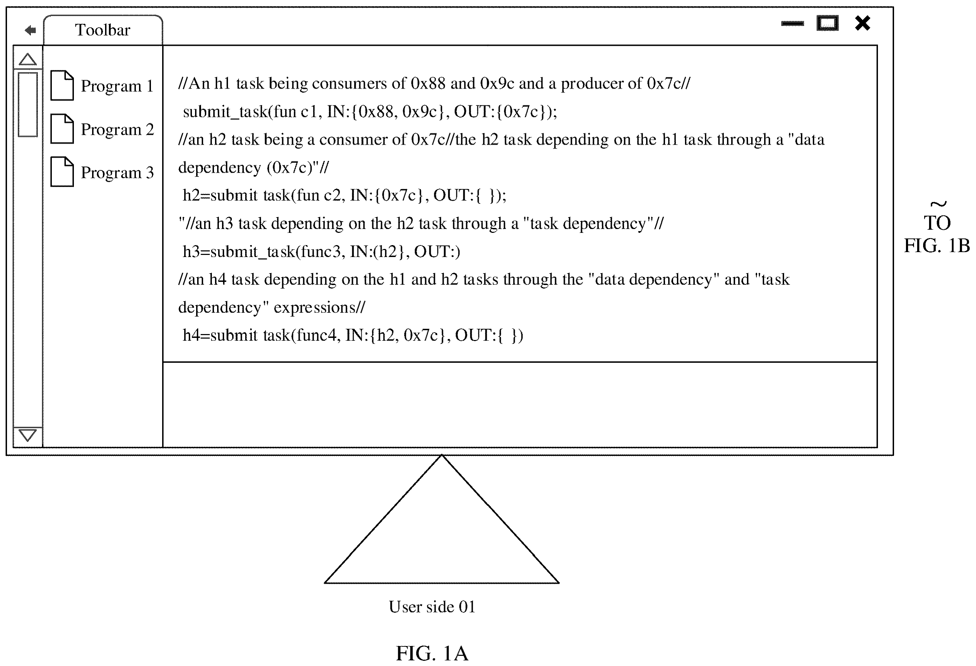

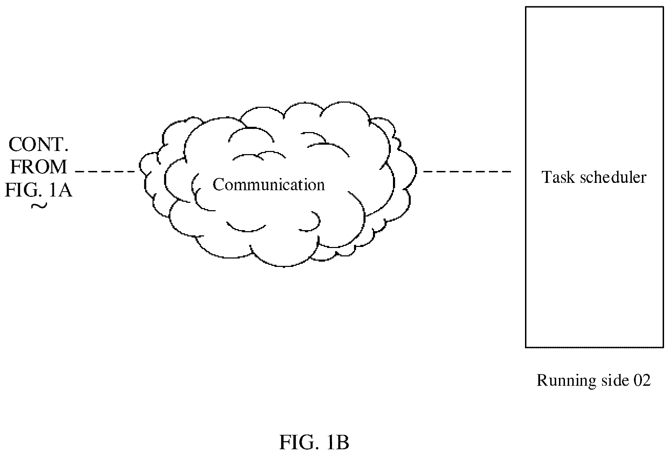

FIG. 1A and FIG. 1B are a diagram of an architecture of a task running system according to an embodiment of this application. As shown in FIG. 1A and FIG. 1B, the task running system includes a user side 01 (which may also be referred to as a device side or a user mode) and a running side 02 (that is, a task scheduler side, which may also be referred to as a host side or a kernel mode).

The user side 01 may receive task information corresponding to each of a plurality of tasks input by a user, where the task information includes input information and output information of the corresponding task. If a part or all of the plurality of tasks are task-dependent tasks, the task information may further include a task identifier and the like. In addition, the task information may further include other related information like a function, a data type, a processing manner, and a processing core that are applicable to the corresponding task.

For example, the user side may receive the task information respectively corresponding to the plurality of tasks input by the user: task 1: submit_task(fun c1, IN: {0x88, 0x9c}, OUT: {0x7c}); task 2: h2=submit_task(fun c2, IN: {0x7c}, OUT: { }); and task 3: h3=submit_task(func3, IN: {h2}, OUT: { }).

Herein, submit task() indicates a task, and information in the brace is task information corresponding to the task. For example, fun XX indicates information about a function invoked by the task (for example, the fun c1 function is invoked by the task 1, the fun c2 function is invoked by the task 2, and the fun c3 function is invoked by the task 3). 0x88, 0x9c, 0x7c, and the like are storage addresses, and indicate data in a storage space corresponding to the storage addresses. h2, h3, and the like are identification information input by the user. The identification information may indicate the running side to generate a task identifier indicating the task, so that the task identifier indicates a logical output of the corresponding task after running of the task ends.

It should be noted that task information corresponding to a task that uses only a data dependency does not include identification information of a task identifier (for example, the task 1), and both task information corresponding to a task that uses a task dependency and task information corresponding to a task on which a task depends may include identification information of task identifiers (for example, the task 3 and the task 2).

In addition, IN: {xxx} indicates an input of the task, and indicates an input object accessed by the task in an IN manner. The input information xxx in the brace may be understood as an input object of the task (that is, a data object corresponding to a storage address or a task object corresponding to a task identifier). The task can be run normally only after the input object is accessed and obtained. It may also be understood that the corresponding task is a consumer of the data object or the task object relative to the data object or the task object in the brace. Therefore, the task can be started only after a previous producer of the object ends. For example, if an input of a task A is data of a storage address A, the task A is a consumer of the data of the storage address A relative to the data of the storage address A. Therefore, the task A can be started to be run based on the data of the storage address A only after a task B generates the data of the storage address A.

OUT: { xxx } indicates an output of the task, and indicates an output object accessed by the task in an OUT manner. Output information xxx in the brace may be understood as the output object of the task (which may be represented by a storage address or a task identifier). It should be noted that, for a task that uses a task dependency and a task on which a task depends, because task identifiers have indicated the tasks and outputs after running of the tasks, correspondingly, information in the brace of OUT:{ } for this type of task may be empty, or in some other embodiments, information in the brace of OUT: { } is consistent with a task identifier corresponding to the brace of OUT: { }. It may also be understood that the corresponding task is a producer of an output object relative to the output object (which may be understood as a data object or a task object) in the brace. Therefore, when information in braces of OUT: { } for at least two tasks is consistent (for example, when storage addresses are the same, it indicates that output data of the at least two tasks is stored in a storage area corresponding to the storage address; and when task identifiers are the same, it indicates that the task identifiers are reused after being reclaimed), to avoid a conflict caused when output objects are used, the tasks can be started to be run only after previous producers and consumers of the output objects end.

It should be noted that the input information of each task may include one or more input objects, and the output information of each task may include one or more output objects.

The running side 02 dynamically schedules and runs the plurality of tasks based on the task information corresponding to each of the plurality of tasks input by the user side. The running side may be understood as a task scheduler. For example, the running side determines a dependency relationship corresponding to the plurality of tasks based on the input information (for example, IN:{xxx}) and/or the output information (for example, OUT: {xxx}) of each of the plurality of tasks; then determines a running sequence of the plurality of tasks based on the dependency relationship corresponding to the plurality of tasks; and finally runs the plurality of tasks in the running sequence.

It should be noted that the running side may further dynamically allocate and manage a lifecycle for a task identifier. The task identifier is used as a medium for connecting a task dependency to a data dependency, so that the task identifier can be reused, and computing and memory resources on the running side can be reduced.

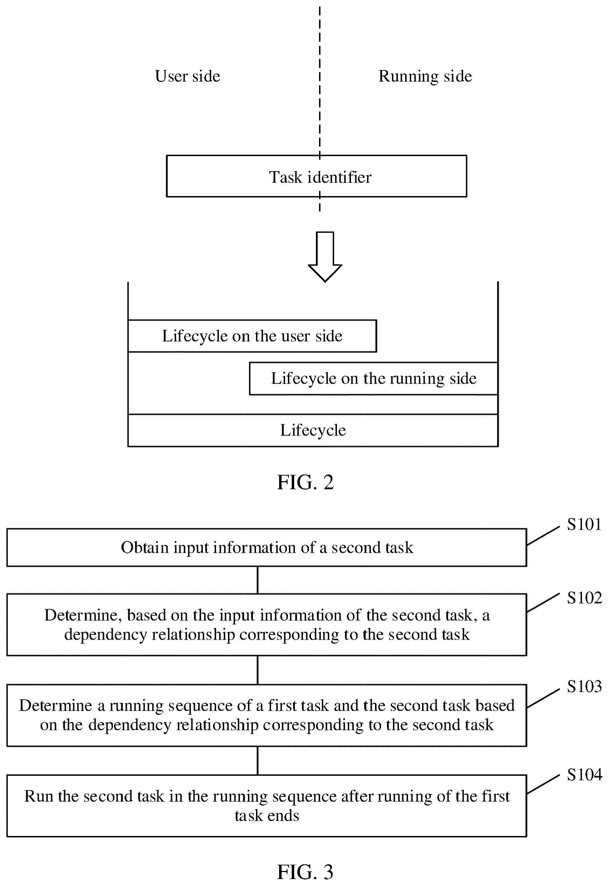

For a case in which the task identifier is reused, a lifecycle for each task identifier corresponding to a different task cannot be repeated. The lifecycle is a time period from a time point at which the task identifier indicates the task after being generated to a time point at which the task identifier is reclaimed by the running side and does not indicate the task. Specifically, refer to FIG. 2. FIG. 2 is a diagram of a lifecycle for a task identifier according to an embodiment of this application. For example, when task information of a target task input by the user is obtained, it is determined that the task information of the target task includes identification information, in other words, a target task identifier indicating the target task may be generated. The target task identifier can be reclaimed only after running of the target task corresponding to the target task identifier ends, and running of another task having a dependency relationship with the target task also ends. After the target task identifier is reclaimed, the target task identifier can be generated again only when necessary (another task whose task information also carries the same identification information), so that the target task identifier indicates the another task.

It may be understood that a "special data object", that is, a task identifier, may be generated by a runtime (equivalent to the running side or the task scheduler) when a task that uses a task dependency is submitted (task information includes identification information). In this case, the task identifier may indicate the task. When the task is run on the running side, the task identifier is associated with the task, and the task identifier can be reclaimed only when the running side no longer invokes or runs the task currently corresponding to the task identifier. Because a task identifier of each task is considered as an output object accessed by the task in an OUT manner, a dependency on the task identifier is accessed in an IN manner. Therefore, as shown in FIG. 2, a lifecycle for the "special data object" needs to meet a union set of a lifecycle for the task identifier on the user side and a lifecycle for the task identifier on the running side. Therefore, in a reuse processing process, the task identifier can be reused only when lifecycles for the task identifier do not overlap.

In addition, a specific manner of reusing the task identifier is not specifically limited in embodiments of this application. For example, in some other embodiments, task information of the first task may be further obtained, and when the task information includes identification information, the first task identifier corresponding to the identification information is associated with the first task, so that the first task identifier indicates the first task. In addition, the first task identifier is disassociated from the first task after running of both the second task and the first task ends. After the first task identifier is disassociated from the first task, the first task identifier does not indicate the first task.

Based on the architecture of the task running system provided in the foregoing embodiment and with reference to the task running method provided in this application, the technical problem proposed in this application is specifically analyzed and resolved.

FIG. 3 is a schematic flowchart of a task running method according to an embodiment of this application. The method may be applied to the architecture of the task running system in FIG. 1A and FIG. 1B. The user side 01 in FIG. 1A and FIG. 1B may be configured to perform step S101, and the running side 02 in FIG. 1A and FIG. 1B may be configured to perform steps S102 to S104. The steps of the task running method are described in detail as follows:
Step S101: Obtain input information of a second task.

Specifically, a task scheduler may receive a plurality of tasks input by a user, and obtain task information of each task. The task information includes input information, output information, and the like of the corresponding task. For example, the task scheduler may obtain input information of the second task based on received task information of the second task.

For example, the user may input the following code:

```
          //an h1 task being consumers of 0x88 and 0x9c and a producer of 0x7c//;
            submit_task(fun c1, IN:{0x88, 0x9c}, OUT: {0x7c});
          //an h2 task being a consumer of 0x7c//the
 h2 task depending on the h1 task through a "data dependency
 (0x7c)"//;
          //an h2 variable being a task handle//;
            h2=submit task(fun c2, IN: {0x7c}, OUT: { });
           "//an h3 task depending on the h2 task through a "task dependency"//;
            h3=submit_task(func3, IN:(h2}, OUT: { });
          //an h4 task depending on the h1 and h2
 tasks through both the "data dependency" and "task dependency"
 expressions//;
          h4=submit task(func4, IN:{h2, 0x7c}, OUT:{ }).
```

In this way, the task scheduler may obtain the input information of the task. In this case, the second task is equivalent to the h3 task in the foregoing code.

In addition, related descriptions of the foregoing code are merely an example manner provided in embodiments of this application. This is not specifically limited in embodiments of this application.

Step S102: Determine, based on the input information of the second task, a dependency relationship corresponding to the second task.

Specifically, the task scheduler may determine, based on the input information of the second task, the dependency relationship corresponding to the second task. The input information of the second task includes a first task identifier, the first task identifier indicates a first task, and the dependency relationship indicates that the second task depends on the first task.

It may be understood that the task scheduler may determine, based on input information of a task, a dependency relationship corresponding to the task. For example, if the input information includes a storage address, it indicates that the task has a data object that uses a data dependency; if the input information includes a task identifier, it indicates that the task has a task that uses a task dependency; or if the input information includes a storage address and a task identifier, it indicates that the task has both a data object that uses the data dependency and a task that uses the task dependency. For example, the input information of the second task includes the first task identifier, and the first task identifier indicates the first task; in this case, the dependency relationship corresponding to the second task indicates that the second task depends on the first task.

Optionally, the method further includes: obtaining task information of the first task, and generating the first task identifier, so that the first task identifier indicates the first task, where the task information includes identification information corresponding to the first task identifier; and reclaiming the first task identifier after running of both the second task and the first task ends.

It should be noted that, if task information corresponding to a task input by the user includes identification information of a task identifier, the task scheduler may generate the corresponding task identifier. For example, related code (equivalent to the task information) corresponding to the task input by the user is as follows: identification information=task name (invoked function, IN: {input information}, OUT:{output information/empty}). In this case, the task scheduler may generate the task identifier corresponding to the identification information. In addition, the task identifier may be specifically understood as a "special data object". A data expression in a case of a task dependency is implemented by indicating the task by the task identifier. Further, running in both a task dependency manner and a data dependency manner is supported based on an underlying implementation of a data expression.

It should be further noted that the identification information included in the task information is an identifier that is in the task information and that directly corresponds to the task, instead of identification information of the task identifier included in the input information. For example, related code (equivalent to task information) corresponding to the task input by the user is as follows: identification information S1 corresponding to a second task identifier=task A (invoked function B, IN: {identification information S2 corresponding to a third task identifier}, OUT: { }). It can be learned from the task information that the task information of the task A includes the identification information S1 corresponding to the second task identifier, and the input information includes the identification information S2 corresponding to the third task identifier. In this case, the task scheduler may generate the second task identifier based on the identification information S1 corresponding to the second task identifier, to indicate the task A. When the task A is run, a task B indicated by the third task identifier needs to be depended on. The task scheduler cannot generate the third task identifier based on the identification information S2 corresponding to the third task identifier and use the third task identifier to indicate the task A.

In addition, to ensure that a function of the task identifier is normal during running, the task scheduler needs to manage a lifecycle for the task identifier. The lifecycle for the task identifier cannot be repeated. In other words, in a time period from associating the task identifier with the task to disassociating the task identifier from the task, the task identifier one-to-one corresponds to the task.

For example, the task scheduler can reclaim the first task identifier only after running of the first task ends and running of the second task that invokes the first task also ends. The reclaimed first task identifier no longer indicates the first task, the reclaimed first task identifier may be generated/allocated by the task scheduler to be re-associated with another task, and the re-associated first task identifier indicates the another task. For a case in which the task identifier is reused, refer to the related descriptions in the foregoing embodiment. Details are not described herein again in embodiments of this application.

In some other embodiments, the task identifier may also be referred to as a task handle. In addition, a manner of associating the task identifier with the task is not specifically limited in embodiments of this application. For example, the task scheduler may allocate a task identifier from a plurality of task identifiers to a target task based on identification information, and reclaim the task identifier when running of the target task ends and the target task does not need to be invoked.

Step S103: Determine a running sequence of the first task and the second task based on the dependency relationship corresponding to the second task.

Specifically, the task scheduler may determine the running sequence of the first task and the second task based on the dependency relationship corresponding to the second task. Because the dependency relationship may indicate that the second task depends on the first task, it indicates that the second task needs to be run after running of the first task ends. Therefore, the task scheduler may determine, based on the dependency relationship between the plurality of tasks, a running sequence corresponding to the plurality of tasks.

Step S104: Run the second task in the running sequence after running of the first task ends.

Specifically, after determining the running sequence of the plurality of tasks, the task scheduler may run the plurality of tasks in the running sequence. For example, the second task is run after running of the first task ends. In addition, a running sequence of a plurality of tasks that do not have the dependency relationship is not specifically limited in this application. For example, for the plurality of tasks that do not have the dependency relationship, if a related condition like a running resource allows, the plurality of tasks may be run in parallel. Details are not described in embodiments of this application.

Optionally, the plurality of tasks further include a third task, output information of the third task includes a first storage address, and the input information of the second task further includes the first storage address. The dependency relationship corresponding to the second task indicates that the second task depends on the first task and the third task. Determining the running sequence of the first task and the second task based on the dependency relationship corresponding to the second task includes: determining a running sequence of the first task, the second task, and the third task based on the dependency relationship corresponding to the second task. Running the second task in the running sequence after running of the first task ends includes: running the second task in the running sequence after running of both the first task and the third task ends.

The input information of the second task further includes the first storage address, and the first storage address corresponds to an output of the third task. In other words, it may be understood that output data obtained after running of the third task ends is stored in a storage area corresponding to the first storage address. In this case, the input information of the second task includes a task identifier corresponding to the first task and the storage address corresponding to the third task. For example, both the "data dependency" expression and the "task dependency" expression are used for the input information of the second task, and the second task depends on the first task and the third task. It may be determined, based on the input information, that the second task depends on both the first task and the third task, where the second task depends on the first task through the task dependency, and depends on the third task through the data dependency. Further, the running sequence of the first task, the second task, and the third task may be determined, to be specific, the second task is run after running of both the first task and the third task ends. In addition, a running sequence of the first task and the third task is not specifically limited in embodiments of this application.

It should be noted that the task identifier corresponds to a logical output after running of the task ends. The storage address corresponds to actual output data after running of the task ends. It can be learned from the foregoing that when the input information of the task includes only a storage address, the dependency relationship between the tasks is a data dependency.

In addition, in this embodiment of this application, the second task may depend on the first task based on the task identifier, and the second task may further depend on the third task based on storage address data. Compared with a case in which only a data expression mode exists in a conventional technology, this embodiment of this application is more generally applicable to various application scenarios. In this way, a conventional data dependency expression form is added, and development complexity and engineering workload are greatly reduced. In addition, in this embodiment of this application, the user can be more flexibly supported in implementing a data dependency expression and a task dependency expression. This greatly improves a data dependency compatibility expression capability in the conventional technology.

Optionally, the plurality of tasks further include a fourth task and a fifth task, both output information of the fourth task and output information of the fifth task include a second storage address, and the input information of the second task further includes the second storage address. The method further includes: comparing task obtaining time corresponding to the fourth task with task obtaining time corresponding to the fifth task, to obtain a comparison result. Determining, based on the input information of the second task, the dependency relationship corresponding to the second task includes: determining, based on the comparison result and the input information of the second task, the dependency relationship corresponding to the second task.

When a task output corresponding to the storage address is an input of another task, the another task obtains an output of a task corresponding to a latest storage address. For example, when the input information of the second task includes the second storage address, the second task obtains latest output information corresponding to the second storage address. The latest output information corresponding to the second storage address is determined based on the task obtaining time.

For example, both the output information of the fourth task and the output information of the fifth task include the second storage address. In this case, the task scheduler may determine the latest output information corresponding to the second storage address in a sequence of obtaining the fourth task and the fifth task, that is, the comparison result of the task obtaining time corresponding to the fourth task and the task obtaining time corresponding to the fifth task, to determine that a task having a data dependency with the second task is the fourth task or the fifth task. In addition, the task scheduler may determine a running sequence of the fourth task and the fifth task based on the comparison result.

It may be understood that, for tasks having a data dependency, each task output obtained after ending of running may correspond to one storage address, but one storage address may correspond to different task outputs in different time periods. When two tasks correspond to a same storage address, outputs corresponding to the storage address are adjusted based on task obtaining time corresponding to the tasks. Correspondingly, the two tasks may have a dependency relationship based on output information of the tasks. It may be understood that the task obtaining time is equivalent to time at which the user submits the task on a user side.

Optionally, determining, based on the comparison result and the input information of the second task, the dependency relationship corresponding to the second task includes: if the task obtaining time corresponding to the fifth task is later than the task obtaining time corresponding to the fourth task, determining that the dependency relationship corresponding to the second task indicates that the second task depends on the first task and the fifth task, where the dependency relationship corresponding to the second task includes a running sequence of the second task, the first task, and the fifth task. The method further includes: running the fifth task after running of the fourth task ends, and updating the second storage address from an output corresponding to the fourth task to an output corresponding to the fifth task after running of the fifth task ends.

When the task obtaining time corresponding to the fifth task is later than the task obtaining time corresponding to the fourth task, it indicates that the fifth task is closer to the second task than the fourth task. Therefore, it may be determined that the dependency relationship corresponding to the second task indicates that the second task depends on the fifth task. In addition, based on the comparison result of the task obtaining time, the running sequence of the fourth task and the fifth task may be further determined, in other words, the fifth task is run after running of the fourth task ends, and the second storage address is updated from the output corresponding to the fourth task to the output corresponding to the fifth task after running of the fifth task ends. This manner of determining a dependency relationship between the tasks based on the task obtaining time when the outputs of the tasks are the same helps the runtime task scheduler determine the dependency relationship between the plurality of tasks, and increases the conventional data dependency expression form.

It should be noted that the task obtaining time of the fourth task and the task obtaining time of the fifth task are both earlier than task obtaining time of the second task.

In some other embodiments, for a case in which only one of the task obtaining time of the fourth task and the task obtaining time of the fifth task is earlier than the task obtaining time of the second task, for example, if the task obtaining time of the fourth task is earlier than the task obtaining time of the second task, and the task obtaining time of the fifth task is later than the task obtaining time of the second task, it may be determined that the dependency relationship corresponding to the second task indicates that the second task depends on the fourth task.

In addition, because the task obtaining time of the fifth task is later than the task obtaining time of the second task, to avoid a task running error caused by updating the second storage address to the output of the fifth task in a process in which the second task invokes data corresponding to the second storage address, the fifth task can be started only after both the previous fourth task and second task end (that is, the fifth task can be started only after both a previous producer and consumer of an output object corresponding to the second storage address end). Therefore, when outputs of the plurality of tasks are the same, the dependency relationship corresponding to the tasks may be further determined based on input information of the tasks and a comparison result of task obtaining time respectively corresponding to the plurality of tasks.

In some other embodiments, in addition to determining the dependency relationship corresponding to the tasks based on the input information of the tasks and the comparison result of the task obtaining time respectively corresponding to the plurality of tasks, the dependency relationship corresponding to the tasks may be determined based on other information and the input information of the tasks. This is not specifically limited in embodiments of this application. For example, the dependency relationship corresponding to the tasks may be determined based on the other information such as output information of the tasks and a preset running sequence.

Optionally, the plurality of tasks further include a sixth task, and output information of the sixth task includes a third storage address. The method further includes: obtaining the input information of the first task, where the input information of the first task includes the third storage address. Determining, based on the input information of the second task, the dependency relationship corresponding to the second task includes: determining, based on the input information of the second task and the input information of the first task, the dependency relationship corresponding to the second task, where the dependency relationship includes the running sequence of the second task, the first task, and the third task.

The dependency relationship between the plurality of tasks needs to be determined, and the input information of the plurality of tasks is separately obtained. Based on task identifiers and/or storage addresses carried in the input information, the dependency relationship between the tasks may be determined, to determine the running sequence corresponding to the tasks. In this embodiment of this application, in this manner of determining the dependency relationship between the tasks based on the input information, where the input information may carry the task identifier, both the task dependency and the data dependency can be supported in the data expression mode, and underlying running logic is normalized. Compared with implementation of the two different running modes in the conventional technology, this implementation reduces the obstacle of the hardware acceleration solution, improves operability, and reduces the hardware acceleration costs.

It should be noted that one storage address corresponds to one task output, and different storage addresses correspond to different task outputs.

In conclusion, according to the task running method provided in this embodiment of this application, a task dependency expression between different tasks may be implemented in a data dependency manner. To be specific, a data expression between the different tasks that use the task dependency is implemented by using a special data object (a task identifier, which may also be referred to as a task handle) to indicate a task. Further, both the task dependency and the data dependency are supported based on the underlying implementation of the data expression. For example, when the plurality of tasks are run, and obtained input information of the task (for example, the input information of the second task) includes a task identifier, it may be determined, based on the task identifier in the input information, that the task is a task-dependent task, and a dependency relationship between the task and a task corresponding to the task identifier may be determined. It may be understood that the input information corresponding to the task includes a task identifier of a depended task (to be specific, the input information of the second task includes the task identifier corresponding to the first task). In other words, when the input information of the task includes the task identifier, it indicates that the task depends on the task corresponding to the task identifier, that is, a task dependency expression is implemented in the data dependency manner. After determining a dependency relationship between the tasks, the task scheduler may determine a running sequence of the tasks based on the dependency relationship, and then run the plurality of tasks in the running sequence. For example, when the dependency relationship indicates that the second task depends on the first task, the second task needs to be run after the first task. Therefore, in this embodiment of this application, both a task dependency and a data dependency are supported in a data expression mode. Compared with implementation of two different running modes in the conventional technology, this implementation reduces an obstacle of a hardware acceleration solution, improves operability, and reduces hardware acceleration costs.

The foregoing describes the method in embodiments of this application in detail. The following provides related apparatuses in embodiments of this application.

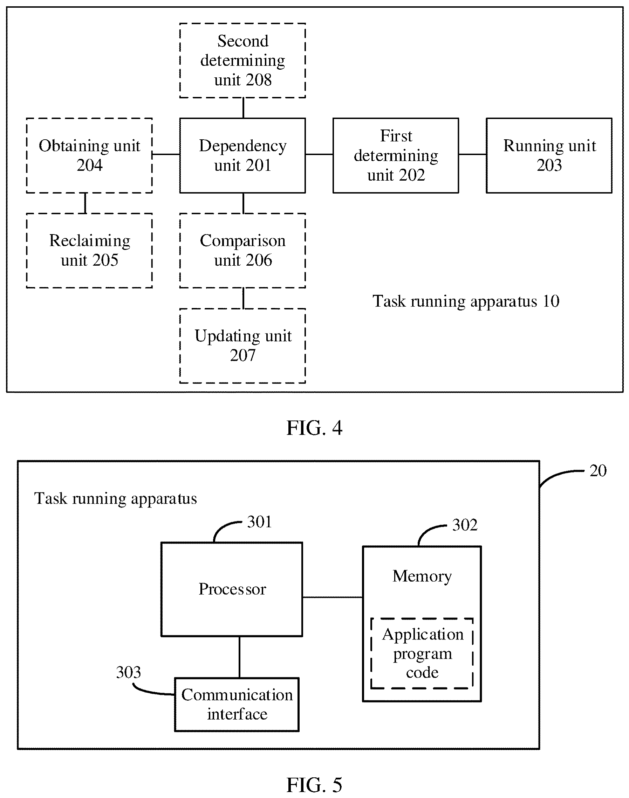

FIG. 4 is a diagram of a structure of a task running apparatus according to an embodiment of this application.

The task running apparatus 10 shown in FIG. 4 is applied to the architecture of the task running system shown in FIG. 1A and FIG. 1B, and is also applied to a task scheduler. A plurality of tasks are run in the task scheduler, and the plurality of tasks include a first task and a second task. The task running apparatus 10 may include a dependency unit 201, a first determining unit 202, and a running unit 203, and may further include an obtaining unit 204, a reclaiming unit 205, a comparison unit 206, an updating unit 207, and a second determining unit 208. The units are described in detail below.

The dependency unit 201 is configured to determine, based on input information of the second task, a dependency relationship corresponding to the second task, where the input information of the second task includes a first task identifier, the first task identifier indicates the first task, and the dependency relationship indicates that the second task depends on the first task.

The first determining unit 202 is configured to determine a running sequence of the first task and the second task based on the dependency relationship corresponding to the second task.

The running unit 203 is configured to run the second task in the running sequence after running of the first task ends.

In a possible implementation, the apparatus further includes: the obtaining unit 204, configured to: obtain task information of the first task, and generate the first task identifier, so that the first task identifier indicates the first task, where the task information includes identification information corresponding to the first task identifier; and the reclaiming unit 205, configured to reclaim the first task identifier after running of both the second task and the first task ends.

In a possible implementation, the plurality of tasks further include a third task, output information of the third task includes a first storage address, and the input information of the second task further includes the first storage address. The dependency relationship corresponding to the second task indicates that the second task depends on the first task and the third task. The first determining unit 202 is specifically configured to: determine a running sequence of the first task, the second task, and the third task based on the dependency relationship corresponding to the second task. The running unit 203 is specifically configured to: run the second task in the running sequence after running of both the first task and the third task ends.

In a possible implementation, the plurality of tasks further include a fourth task and a fifth task, both output information of the fourth task and output information of the fifth task include a second storage address, and the input information of the second task further includes the second storage address. The apparatus further includes: the comparison unit 206, configured to compare task obtaining time corresponding to the fourth task with task obtaining time corresponding to the fifth task, to obtain a comparison result. The dependency unit 201 is specifically configured to: determine, based on the comparison result and the input information of the second task, the dependency relationship corresponding to the second task.

In a possible implementation, the dependency unit 201 is specifically configured to: if the task obtaining time corresponding to the fifth task is later than the task obtaining time corresponding to the fourth task, determine that the dependency relationship corresponding to the second task indicates that the second task depends on the first task and the fifth task, where the dependency relationship corresponding to the second task includes a running sequence of the second task, the first task, and the fifth task. The apparatus further includes the updating unit 207, configured to: run the fifth task after running of the fourth task ends, and update the second storage address from an output corresponding to the fourth task to an output corresponding to the fifth task after running of the fifth task ends.

In a possible implementation, the plurality of tasks further include a sixth task, and output information of the sixth task includes a third storage address. The apparatus further includes: the second determining unit 208, configured to determine input information of the first task, where the input information of the first task includes the third storage address. The first determining unit 202 is specifically configured to: determine, based on the input information of the second task and the input information of the first task, the dependency relationship corresponding to the second task, where the dependency relationship includes the running sequence of the second task, the first task, and the third task.

It should be noted that, for functions of the functional modules in the task running apparatus 10 described in this embodiment of this application, refer to the related descriptions of step S101 to step S104 in the method embodiment described in FIG. 3. Details are not described herein again.

An embodiment of this application further provides an electronic device. The electronic device may be a device like a server, a desktop computer, a handheld computer, a notebook computer, an ultra-mobile personal computer, a netbook, an artificial intelligence device, or a vehicle-mounted device. The electronic device includes a memory and a task scheduler. A plurality of tasks are run in the task scheduler, and the plurality of tasks include a first task and a second task. The task scheduler is configured to:
determine, based on input information of the second task, a dependency relationship corresponding to the second task, where the input information of the second task includes a first task identifier, the first task identifier indicates the first task, and the dependency relationship indicates that the second task depends on the first task;
determine a running sequence of the first task and the second task based on the dependency relationship corresponding to the second task; and
run the second task in the running sequence after running of the first task ends.

In a possible implementation, the task scheduler is further configured to: obtain task information of the first task, and generate the first task identifier, so that the first task identifier indicates the first task, where the task information includes identification information corresponding to the first task identifier; and reclaim the first task identifier after running of both the second task and the first task ends.

In a possible implementation, the plurality of tasks further include a third task, output information of the third task includes a first storage address, the input information of the second task further includes the first storage address, and the dependency relationship corresponding to the second task indicates that the second task depends on the first task and the third task. The task scheduler is specifically configured to determine a running sequence of the first task, the second task, and the third task based on the dependency relationship corresponding to the second task. The task scheduler is specifically configured to run the second task in the running sequence after running of both the first task and the third task ends.

In a possible implementation, the plurality of tasks further include a fourth task and a fifth task, both output information of the fourth task and output information of the fifth task include a second storage address, and the input information of the second task further includes the second storage address. The task scheduler is further configured to compare task obtaining time corresponding to the fourth task with task obtaining time corresponding to the fifth task, to obtain a comparison result. The task scheduler is specifically configured to determine, based on the comparison result and the input information of the second task, the dependency relationship corresponding to the second task.

In a possible implementation, the task scheduler is specifically configured to: if the task obtaining time corresponding to the fifth task is later than the task obtaining time corresponding to the fourth task, determine that the dependency relationship corresponding to the second task indicates that the second task depends on the first task and the fifth task. The dependency relationship corresponding to the second task includes a running sequence of the second task, the first task, and the fifth task. The task scheduler is further configured to: run the fifth task after running of the fourth task ends; and update the second storage address from an output corresponding to the fourth task to an output corresponding to the fifth task after running of the fifth task ends.

In a possible implementation, the plurality of tasks further include a sixth task, and output information of the sixth task includes a third storage address. The task scheduler is further configured to obtain input information of the first task, where the input information of the first task includes the third storage address. The task scheduler is specifically configured to determine, based on the input information of the second task and the input information of the first task, the dependency relationship corresponding to the second task, where the dependency relationship includes the running sequence of the second task, the first task, and the third task.

It should be noted that the task scheduler mentioned in this embodiment of this application may be a chip, a processor, a processing module, or the like. A specific form of the task scheduler is not specifically limited in this application.

It should be further noted that, for related functions of the electronic device described in this embodiment of this application, refer to the related descriptions of step S101 to step S104 in the foregoing method embodiment in FIG. 3 and other embodiments. Details are not described herein again.

FIG. 5 is a diagram of a structure of another task running apparatus according to an embodiment of this application. The apparatus 20 includes at least one processor 301, at least one memory 302, and at least one communication interface 303. In addition, the device may further include a general-purpose component like an antenna. Details are not described herein.

The processor 301 may be a general-purpose central processing unit (CPU), a microprocessor, an application-specific integrated circuit (application-specific integrated circuit, ASIC), or one or more integrated circuits configured to control execution of the foregoing solution program.

The communication interface 303 is configured to communicate with another device or a communication network, for example, the Ethernet, a radio access network (RAN), a core network, or a wireless local area network (Wireless Local Area Networks, WLAN).

The memory 302 may be a read-only memory (read-only memory, ROM) or another type of static storage device capable of storing static information and instructions, or a random access memory (Random Access Memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or other compact disc storage, optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through a bus. The memory may alternatively be integrated with the processor.

The memory 302 is configured to store application program code for executing the foregoing solution and store related data, and the processor 301 controls the execution. The processor 301 is configured to execute the application program code stored in the memory 302.

The code stored in the memory 302 may be used to perform the task running method provided in FIG. 3. For example, a plurality of tasks are dynamically scheduled and run based on task information corresponding to each of the plurality of tasks input by the user side. A plurality of tasks are run in the processor, and the plurality of tasks include a first task and a second task. The processor is configured to: determine, based on input information of the second task, a dependency relationship corresponding to the second task, where the input information of the second task includes a first task identifier, the first task identifier indicates the first task, and the dependency relationship indicates that the second task depends on the first task; determine a running sequence of the first task and the second task based on the dependency relationship corresponding to the second task; and run the second task in the running sequence after running of the first task ends.

It should be noted that, for functions of the functional units in the task running apparatus 20 described in this embodiment of this application, refer to the related descriptions of step S101 to step S104 in the method embodiment in FIG. 3. Details are not described herein again.

In the foregoing embodiments, the description of each embodiment has respective focuses. For a part that is not described in detail in an embodiment, refer to related descriptions in other embodiments.

It should be noted that, for brief description, the foregoing method embodiments are represented as a combination of a series of actions. However, a person skilled in the art should appreciate that this application is not limited to the described sequence of the actions, because according to this application, some steps may be performed in other sequences or simultaneously. It should be further appreciated by a person skilled in the art that embodiments described in this specification all belong to example embodiments, and the involved actions and modules are not necessarily required by this application.

The terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, in a distributed system, and/or across a network such as the internet interacting with other systems by using the signal).

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like, and may be specifically a processor in a computer device) to perform all or some of the steps of the methods described in embodiments of this application. The foregoing storage medium may include any medium that can store program code, for example, a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A task running method, applied to a task scheduler, wherein a plurality of tasks are run in the task scheduler, the plurality of tasks comprise a first task and a second task, and the method comprises:
determining, based on input information of the second task, a dependency relationship corresponding to the second task, wherein the input information of the second task comprises a first task identifier, the first task identifier indicates the first task, and the dependency relationship indicates that the second task depends on the first task;
determining a running sequence of the first task and the second task based on the dependency relationship corresponding to the second task; and
running the second task in the running sequence after running of the first task ends.

2. The method according to claim 1, wherein the method further comprises:
obtaining task information of the first task, and generating the first task identifier, so that the first task identifier indicates the first task, wherein the task information comprises identification information corresponding to the first task identifier; and
reclaiming the first task identifier after running of both the second task and the first task ends.

3. The method according to claim 1 or 2, wherein the plurality of tasks further comprise a third task, output information of the third task comprises a first storage address, and the input information of the second task further comprises the first storage address;
the dependency relationship corresponding to the second task indicates that the second task depends on the first task and the third task;
determining the running sequence of the first task and the second task based on the dependency relationship corresponding to the second task comprises:
determining a running sequence of the first task, the second task, and the third task based on the dependency relationship corresponding to the second task; and
running the second task in the running sequence after running of the first task ends comprises:
running the second task in the running sequence after running of both the first task and the third task ends.

4. The method according to claim 1 or 2, wherein the plurality of tasks further comprise a fourth task and a fifth task, both output information of the fourth task and output information of the fifth task comprise a second storage address, and the input information of the second task further comprises the second storage address; and the method further comprises:
comparing task obtaining time corresponding to the fourth task with task obtaining time corresponding to the fifth task, to obtain a comparison result; and
determining, based on the input information of the second task, the dependency relationship corresponding to the second task comprises:
determining, based on the comparison result and the input information of the second task, the dependency relationship corresponding to the second task.

5. The method according to claim 4, wherein determining, based on the comparison result and the input information of the second task, the dependency relationship corresponding to the second task comprises:
if the task obtaining time corresponding to the fifth task is later than the task obtaining time corresponding to the fourth task, determining that the dependency relationship corresponding to the second task indicates that the second task depends on the first task and the fifth task, wherein the dependency relationship corresponding to the second task comprises a running sequence of the second task, the first task, and the fifth task; and
the method further comprises:
running the fifth task after running of the fourth task ends, and updating the second storage address from an output corresponding to the fourth task to an output corresponding to the fifth task after running of the fifth task ends.

6. The method according to any one of claims 1 to 5, wherein the plurality of tasks further comprise a sixth task, output information of the sixth task comprises a third storage address, and the method further comprises:
obtaining input information of the first task, wherein the input information of the first task comprises the third storage address; and
determining, based on the input information of the second task, the dependency relationship corresponding to the second task comprises:
determining, based on the input information of the second task and the input information of the first task, the dependency relationship corresponding to the second task, wherein the dependency relationship comprises the running sequence of the second task, the first task, and the third task.

7. A task running apparatus, used in a task scheduler, wherein a plurality of tasks are run in the task scheduler, the plurality of tasks comprise a first task and a second task, and the apparatus comprises:
a dependency unit, configured to determine, based on input information of the second task, a dependency relationship corresponding to the second task, wherein the input information of the second task comprises a first task identifier, the first task identifier indicates the first task, and the dependency relationship indicates that the second task depends on the first task;
a first determining unit, configured to determine a running sequence of the first task and the second task based on the dependency relationship corresponding to the second task; and
a running unit, configured to run the second task in the running sequence after running of the first task ends.

8. The apparatus according to claim 7, wherein the apparatus further comprises:
an obtaining unit, configured to: obtain task information of the first task, and generate the first task identifier, so that the first task identifier indicates the first task, wherein the task information comprises identification information corresponding to the first task identifier; and
a reclaiming unit, configured to reclaim the first task identifier after running of both the second task and the first task ends.

9. The apparatus according to claim 7 or 8, wherein the plurality of tasks further comprise a third task, output information of the third task comprises a first storage address, and the input information of the second task further comprises the first storage address;
the dependency relationship corresponding to the second task indicates that the second task depends on the first task and the third task;
the first determining unit is specifically configured to:
determine a running sequence of the first task, the second task, and the third task based on the dependency relationship corresponding to the second task; and
the running unit is specifically configured to:
run the second task in the running sequence after running of both the first task and the third task ends.

10. The apparatus according to claim 7 or 8, wherein the plurality of tasks further comprise a fourth task and a fifth task, both output information of the fourth task and output information of the fifth task comprise a second storage address, and the input information of the second task further comprises the second storage address; and the apparatus further comprises:
a comparison unit, configured to compare task obtaining time corresponding to the fourth task with task obtaining time corresponding to the fifth task, to obtain a comparison result; and
the dependency unit is specifically configured to:
determine, based on the comparison result and the input information of the second task, the dependency relationship corresponding to the second task.

11. The apparatus according to claim 10, wherein the dependency unit is specifically configured to:
if the task obtaining time corresponding to the fifth task is later than the task obtaining time corresponding to the fourth task, determine that the dependency relationship corresponding to the second task indicates that the second task depends on the first task and the fifth task, wherein the dependency relationship corresponding to the second task comprises a running sequence of the second task, the first task, and the fifth task; and
the apparatus further comprises an updating unit, configured to:
run the fifth task after running of the fourth task ends, and update the second storage address from an output corresponding to the fourth task to an output corresponding to the fifth task after running of the fifth task ends.

12. The apparatus according to any one of claims 7 to 11, wherein the plurality of tasks further comprise a sixth task, output information of the sixth task comprises a third storage address, and the apparatus further comprises:
a second determining unit, configured to determine input information of the first task, wherein the input information of the first task comprises the third storage address; and
the first determining unit is specifically configured to:
determine, based on the input information of the second task and the input information of the first task, the dependency relationship corresponding to the second task, wherein the dependency relationship comprises the running sequence of the second task, the first task, and the third task.

13. An electronic device, wherein the electronic device comprises a memory and a task scheduler, a plurality of tasks are run in the task scheduler, the plurality of tasks comprise a first task and a second task, and the task scheduler is configured to:
determine, based on input information of the second task, a dependency relationship corresponding to the second task, wherein the input information of the second task comprises a first task identifier, the first task identifier indicates the first task, and the dependency relationship indicates that the second task depends on the first task;
determine a running sequence of the first task and the second task based on the dependency relationship corresponding to the second task; and
run the second task in the running sequence after running of the first task ends.

14. A computer program product, wherein the computer program product comprises a computer program, and when the computer program is executed by a computer or a processor, the computer or the processor is enabled to perform the method according to any one of claims 1 to 6.

15. A computer-readable storage medium, wherein the computer-readable storage medium stores a computer program, and when the computer program is executed by a computer or a processor, the method according to any one of claims 1 to 6 is implemented.
